# EUROPEAN PATENT SPECIFICATION

(11) **EP 4 435 068 B1**
(45) Date of publication and mention of the grant of the patent: **29.04.2026**
(21) Application number: 23163745.5
(22) Date of filing: 23.03.2023
(51) Int. Cl.: C09D 11/38, C09D 11/102, C09D 11/322, D06P 5/30

(54) **INK COMPOSITION AND INK JET PRINTING PROCESS**
TINTENZUSAMMENSETZUNG UND TINTENSTRAHLDRUCKVERFAHREN
COMPOSITION D'ENCRE ET PROCÉDÉ D'IMPRESSION PAR JET D'ENCRE

(43) Date of publication of application: 25.09.2024
(73) Proprietor: Dover Europe Sàrl, 1214 Vernier (CH)
(72) Inventor: Guggiari, Luca, 22100 Como (IT); Ugoletti, Marco, 20128 Milano (IT); Zago, Dario, 22070 Bregnano (Como) (IT); Ferrato, Anna, 22073 Fino Mornasco (Como) (IT); Biffi, Cesare, 21047 Saronno (Varese) (IT)
(74) Representative: PGA S.p.A., Milano, Succursale di Lugano

(56) References cited:
- EP-A1- 3 524 728
- CN-A- 107 603 342
- CN-A- 110 591 448
- CN-A- 111 270 532
- CN-A- 112 853 777
- CN-A- 113 930 983

## Description

### FIELD OF THE INVENTION

The present invention relates to an ink composition with improved storage stability and to an ink jet printing process employing such an ink composition.

More in particular, the present invention relates to an aqueous ink composition comprising a pigment, a binder, a crosslinker, and a polyol and to an ink jet printing process avoiding the steps of pre- and post-treatment.

### STATE OF THE ART

Inkjet printing is a non-impact printing method that utilizes electronic signals to control and direct droplets or a stream of ink to be deposited on media. Such technique has become a popular way of recording images on various media. Some of the reasons include low printer noise, variable content recording, capability of high-speed recording, and multi-color recording.

As the popularity of inkjet printing increases, the types of use also increase providing demand for new ink compositions and substrates to be printed on.

Such substrate can be textile. Textile printing can have various applications including the creation of signs, banners, artwork, apparel, wall coverings, window coverings, upholstery, pillows, blankets, flags, tote bags, clothing, etc.

Additionally, there is a tendency to go from dye based inks to pigment based inks. Pigment based inks hold the promise of being compatible with different fibres, both natural fibres such as cellulose base fibres e.g. in cotton and synthetic fibres such as polyester and polyamide. Pigment based inks also allow to print on mixed fibre fabrics.

Pigmented aqueous inkjet inks prepared with soluble resin binders are used for printing onto a wide variety of substrates. The pigment-based colorants used in these inks are much more resistant to fade than dye-based colorants and are thus suitable for applications requiring exposure to direct sunlight.

However, most of the fabrics have a porous nature. When printing with pigment inks onto different fabrics, pigments penetrate deeper into the fabric resulting in loss of gamut and difficulty to obtain high-density patterns. Further, obtaining pigmented images with desirable opacity and good durability of wash for example, may be challenging, in part due to the use of fabrics and also because of fibrillation, e.g., hairy fibers sticking out of the fabric surface. Another disadvantage of inkjet printing with pigmented ink, is that inkjet printed fabrics are particularly susceptible to color removal by abrasion and thus have poor durability or fastness.

In order to solve the above mentioned problems, the prior art suggested to apply several pre- and post-treatments to the textile substrate. Pre-treatment solutions comprising cationic surfactant, water-soluble dispersing agents having crosslinking properties, urethane resins, and crosslinking agents are disclosed, for example in US2016/177112, WO2006/00384, US2014/0186533, US2019/367760, WO2020/005253, WO2022/173425. Post-treatments solutions comprising cationic polymers or copolymers, surfactants, silicone derivatives, oils, waxes, plasticizers, fabric softeners, are disclosed, for example, in WO2018/163966A1, WO2000/056972A1, US2002/0130939 and US2003/160851. Additionally, EP3524728 might be cited as prior art.

Pre- and post-treatments are disadvantageous from the viewpoint of productivity because they lead to an increase in the number of steps and the cost of printed matter production. In addition, since waste liquid treatment is indispensable in the pre and post-treatment process, it is necessary to consider environmental pollution.

In addition to pigment, aqueous ink compositions for ink jet textile printing generally comprises polymeric binders and crosslinking agents.

The color strength and fastness of pigmented ink on textiles is generally controlled by the amount of polymeric binder added to the ink mixture. It is very difficult, however, to achieve good fastness of pigmented inks onto printed or coated fabric through increased binder addition without a detrimental change of the fabric softness. When the amount of polymeric binder is high enough to demonstrate good durability (or fastness), fabric hand becomes stiff or harsh. If the amount of binder is reduced to keep fabric hand constant, good fastness, especially fastness to crocking, cannot be achieved.

Increase performance in terms of color strength and fastness can also be obtained by increasing the amount of crosslinking agents. The crosslinking agent can be blocked to avoid premature reaction with binder during transportation and storage. However, by increasing the amount, the system becomes instable, the blocking agent can detach itself, and the crosslinking agent can start to react with the binder, so increasing the viscosity and shorten the shelf life of the ink.

It is therefore an object to provide an aqueous ink composition which is stable under storage, easy to apply and fix to the fabric, and which will remain on the fabric when exposed to most common cleaning and usage conditions, i.e., which have a high color strength and fastness.

It is a further object of the present invention to provide a printing process which employs the aqueous ink composition with the above advantages and that preferably does not require exhaustive pre- and/or post-treatment steps.

### SUMMARY OF THE INVENTION

The Applicant has faced the problem of developing an aqueous ink composition which allowed to overcome the above mentioned problems and that could be printed on a substrate without the use of pre- and post-treatment step.

After extensive experimentation, the Applicant has found a solution consisting in an ink composition comprising a pigment, a binder, in particular a polyurethane binder, a blocked crosslinking agent, in particular a blocked isocyanate, and a polyol.

The Applicant has surprisingly found that the use of a specific polyol selected from the group consisting of ethylene glycol, 1,3-budandiol, 1,5-pentandiol, triethylene glycol, and trimethylol propane, allowed to stabilize the ink composition even under accelerate aging, and get better overall printing performances.

More in particular, the Applicant has found that the ink composition according to the invention was stable under accelerate aging at 50°C for four weeks, and had improved latency, printability, and wet rubbing fastness.

Moreover, the Applicant has found that the ink composition according to the invention can be employed in a printing process on substrates without the use of pre- and post-treatment step.

Accordingly, in one aspect, the present invention relates to an aqueous ink composition comprising a pigment, a polyurethane binder, a blocked crosslinking agent, and a polyol, wherein said polyol is selected from the group consisting of ethylene glycol, 1,3-budandiol, 1,5-pentandiol, triethylene glycol, and trimethylol propane.

In another aspect, the present invention relates to a printing process comprising
- a printing step applying the ink composition of the present invention to a substrate,
- a fixing/drying step applying heat to chemically reacting the crosslinking agent and the polyurethane binder of the ink composition.

In a preferred embodiment of the printing process of the present invention, the substrate is neither subjected to a pre-treatment step with a pre-treatment solution before the printing step, nor subjected to a post-treatment step with a post-treatment solution after the printing step.

### DETAILED DESCRIPTION OF THE INVENTION

While this invention can be implemented in many different forms, specific embodiments thereof will be further described herein with the understanding that the present disclosure is an exemplification of the principles of the invention and is not intended to limit the invention to the specific embodiments illustrated.

The aqueous ink composition according to the present invention comprises a pigment dispersion, a polyurethane binder, a blocked crosslinking agent, a fluid carrier, and a polyol, wherein said polyol is selected from the group consisting of ethylene glycol, 1,3-budandiol, 1,5-pentandiol, triethylene glycol, and trimethylol propane.

### Ink Composition

### Pigment

Pigments refer to a colorant particle that is typically water-insoluble. Suitable pigments that can be used to form the ink composition of the invention may include any organic or inorganic pigment known in the art, including, but not limited to, black, yellow, orange, brown, red, violet, blue, green, fluorescent, metal powder and polymer bond pigments. Pigments also may include, but are not limited to, carbon black, azo pigments, phthalocyanine pigments, anthraquinone pigments, perylene and perynone pigments, polycyclic pigments, naphthol pigments, anthrapyrimidone pigments, quinacridone pigments, anthanthrone pigments, flavanthrone pigments, thioindigo pigments, dioxazine pigments, isoindoline and isoindolinone pigments, quinophthalone pigments, azine pigments, nitroso pigments, nitro pigments, triphenylmethane lake pigments, oxazine lake pigments, metal complex pigments, natural pigments, and inorganic pigments, among others. The pigment particles should be sufficiently small to permit free flow of the ink through the ejecting nozzle of a inkjet printing device.

Suitable colored pigments can include, for example:
- yellow pigments such as C. I. Pigment Yellow 1, 2, 3, 4, 5, 6, 10, 12, 13, 14, 16, 17, 24, 55, 61, 65, 73, 74, 81, 83, 93, 94, 95, 97, 99, 100, 108, 109, 110, 117, 120, 123, 124, 128, 129, 133, 138, 139, 147, 150, 151, 153, 154, 155, 156, 167, 168, 172, 173, 174, 175, 176, 177, 179, 180, 181, 182, 183, 184, 185, 187, 188, 190, 191, 192, 193, 194 and mixture thereof;
- red pigments such as, C. I. Pigment Red 1, 2, 3, 4, 5, 6, 7, 8, 9, 10, 11, 12, 13, 14, 15, 16, 17, 18, 19, 21, 22, 23, 30, 31, 32, 37, 38, 39, 40, 48, 49, 50, 51, 52, 53, 55, 60, 64, 68, 81, 83, 87, 88, 89, 90, 95, 112, 114, 119, 122, 123, 136, 144, 146, 147, 148, 149, 150, 151, 163, 164, 166, 168, 169, 170, 161, 172, 175, 176, 202, 204, 206, 207, 210, 211, 212, 213, 214, 216, 220, 222, 237, 238, 239, 240, 242, 243, 245, 247, 248, 251, 252, 253, 254, 255, 256, 258, 261, 264 and mixture thereof;

- violet pigments such as C. I. Pigment Violet 1, 2, 3, 5, 13, 19, 23, 25, 27, 29, 31, 32, 37, 39, 42, 44, 50 and mixture thereof;
- blue pigments such as C. I. Pigment Blue 1, 2, 3, 9, 10, 14, 15, 16, 18, 19, 21, 22, 24, 25, 56, 60, 61, 62, 63, 64, 65, 66, and mixture thereof;
- orange pigments such as C. I. Pigment Orange 1, 2, 5, 6, 7, 13, 14, 15, 16, 17, 19, 22, 24, 31, 34, 36, 38, 40, 42, 43, 44, 46, 48, 49, 51, 59, 60, 61, 62, 63, 64, 65, 66, 67, 68, 69 and mixture thereof;
- green pigments such as C. I. Pigment Green 1, 2, 4, 7, 8, 10, 34, 36, 45, 47, and mixture thereof;
- brown pigments such as C. I. Pigment Brown 1, 2, 3, 5, 22, 23, 25, 26, 32, 38, 41, 42 and mixture thereof;
- black pigments such as C. I. Pigment Black 1, 7, 20, 31, 32 and mixture thereof, and
- white pigments such as titanium dioxide.

Mixture of differently colored pigment are also included. Commercially available colored pigments may include, for example, Pigment Red 122 and Pigment Violet 19 (available from Lansco Colors, Montvale, N.J. or Clariant Colors, Charlotte, N.C. or Sun Chemical, Cincinnati, Ohio), Pigment Blue 15:1 (available from Fanwood Chemical, Fanwood, N.J.), Pigment Blue 15:3, Pigment 15:4, Pigment Yellow 74 and Pigment Yellow 97 (available from Clariant Colors, Charlotte, N.C. or Sun Chemical, Cincinnati, Ohio), among others. Other suitable pigments may include, but are not limited to Disperse Blue 14, Disperse Blue 19, Disperse Blue 72, Disperse Blue 334, Disperse Blue 359, Disperse Blue 360, Disperse Orange 25, Disperse Yellow 54, Disperse Yellow 64, Disperse Red 55, Disperse Red 60, Macrolex Red H, Disperse Brown 27, Solvent Blue 67, Solvent Blue 70, Solvent Red 49, Solvent Red 146, Solvent Red 160, Solvent Yellow 162, Solvent Violet 10, and Solvent Black 29, among others.

Suitable pigments can also include carbon black, which is the generic name for carbon particles derived from the thermal decomposition or the incomplete combustion of natural gas and hydrocarbons, such as aromatic oils on coal tar basis, mineral oils, coal tar distillate, and acetylene. More than 100 individual grades of carbon black are available on the market today, each with its own distinctive set of characteristics and properties. Any acidic carbon black, neutral carbon black and alkaline carbon black can be used. This includes channel blacks, gas blacks, lamp blacks, thermal blacks, acetylene blacks and furnace blacks. More particularly, suitable carbon blacks include channel blacks.

Examples of commercially available carbon blacks include, but are not limited to, those available from Cabot (Elftex 8, Black Pearls^{®} 490, Black Pearls^{®} 120, Monarch^{®} 120, Monarch^{®} 700, Monarch^{®} 880, Monarch^{®} 1000, Monarch^{®} 1100, Monarch^{®} 1300, Monarch^{®} 1400, Mogul^{®} L, Regal^{®} 99R, Regal^{®} 250R, Regal^{®} 300R, Regal^{®} 330R, Regal^{®} 400R, Regal^{®} 500R, Regal^{®} 660R, Cab-O-Jet^{®} 200, Cab-O-Jet^{®} 300, and Cab-O-Jet^{®} 400), Degussa/Orion Carbon (NIPex^{®} 150IQ, NIPex^{®} 150, Printex^{®} 55, Printex^{®} 80, Printex^{®} 90, Printex^{®} A, Printex^{®} G, Printex^{®} U, Printex^{®} V, Printex^{®} 140U, Printex^{®} 140V, Purex^{®} LS 35, Corax^{®} HP 160, Thermal Black N 990, NIPex^{®} 160 IQ, Nipex^{®} 170IQ, Nipex^{®} 180IQ, NIPex^{®} 90, Special black 4, Special black 4A, Special black 5, Special black 6, Special black 100, Special black 250, Color black FW1, Color black FW2, Color black FW2V, Color black FW18, Color black FW200, Color black S150, Color black S160 and Color black S170), Columbian/Birla Carbon (Raven^{®} 780, Raven^{®} 5000 Ull, Raven^{®} 1255, Raven^{®} 2500 U, Raven^{®}3600 U, Raven^{®} 3500, Raven^{®} 5000, Raven^{®} 7000, Raven^{®} 1220 and Raven^{®} 1225), Mitsubishi Kagaku K.K. (MA8, MAII, MA77, MA100, MA220, MA230, MA600, MCF88, #10B, #20B, #30, #33, #40, #44, #45, #45L, #50, #55, #95, #260, #900, #970, #1000, #2200B, #2300, #2350, #2400B, #2650, #2700, #4000B and CF9), Orient Chemical Industries Ltd. (Bonjet Black CW-1, Bonjet Black CW-2, and Bonjet Black CW-3) and Sun Chemical (Graphitan^{®} 7525).

In some embodiments, the pigment can be self-dispersing in a selected continuous phase. Self-dispersing pigments are pigments that do not require an additional dispersant for being stable within a polymer composition. In an embodiment, a self-dispersing pigment is a pigment that has been functionalized with a dispersing agent such as a molecule containing a hydrophilic functional group, for example, by covalent bonding of the molecule to the surface of the pigment.

In other embodiments, a pigment is combined with a dispersant such as a water-soluble polymer (e.g., vinyl polymer, urethane polymer). In an embodiment, the pigment is a polymer-dispersed pigment comprising a polymer adsorbed thereto.

In an embodiment, the amount (by weight) of the pigment in the ink compositions of the present invention is at least 0.5, such as at least 1, at least 1.5, and at least 2, % by weight. In an embodiment, the amount of the colorant is at most 15, such as at most 10, at most 9, at most 8, and at most 7, % by weight. This includes embodiments in which the amount of the colorant in the compositions is 0.5 to 15% by weight, such as 1 to 10, 2 to 9, % by weight.

A pigment used in the ink compositions of the present invention can comprise one or more embodiments described herein.

### Polyurethane binder

In an embodiment, the polyurethane binder is a polyurethane polymer having pendant hydroxyl groups and, optionally, pendant neutralized carboxyl groups attached to the backbone of the polymer.

In an embodiment, the polyurethane polymer is a polyurethane polymer having pendant hydroxyl groups attached to the backbone of the polymer.

The term "pendant group" as used herein describes a side group of a polymer main chain (backbone). The term "terminal group" describes a group attached to a terminal end of the polymer main chain.

In an embodiment, the hydroxyl number of the polyurethane polymer is at least 51, such as at least 60, at least 70, and at least 80. In an embodiment, the hydroxyl number of the polyurethane polymer is 1000 or less, such as 750 or less, 500 or less, 250 or less, 200 or less, 150 or less, and 100 or less. This includes embodiments in which the polyurethane polymer has a hydroxyl number of from 51 to 1000, such as from 51 to 300, from 80 to 200, and from 80 to 100.

In an embodiment, the polyurethane polymer has a carboxyl number of zero (0). In other embodiments, the polyurethane polymer has a carboxyl number of at least 1, such as at least 5, and at least 10. In an embodiment, the carboxyl number of the polyurethane polymer is 100 or less, such as 80 or less, 60 or less, and 50 or less. This includes embodiments in which the polyurethane polymer has a carboxyl number of from 0 to 100, such as from 1 to 80, from 5 to 60, and from 10 to 50.

The polyurethanes can be produced by methods known and used in the art. In general, the polyurethane polymer can be produced by reaction of an isocyanate compound with a polyol, an ionic polyol, or a combination thereof, in the presence of a catalyst.

Examples of isocyanate compounds are well known in the art and include, for example, but are not limited to, 1,6-hexamethylene diisocyanate (HDI), isophorone diisocyanate, methylene diphenyl diisocyanate (MDI), and toluene diisocyanate (TDI), among others.

Examples of suitable polyols include diols, triols, tetraols, pentaols and oligomers having pendant or terminal hydroxyl groups. Examples of diols include, but are not limited to, ethylene glycol, propylene glycol, 1,3-propanediol, 1,4-butylene glycol, 1,5-pentanediol, 1,6-hexandiol, neopentyl glycol, diethylene glycol, triethylene glycol, and dipropylene glycol. Examples of triols include, but are not limited to, glycerol and trimethylolpropane. Examples of tetraols include, but are not limited to, tetramethylolmethane (pentaerythritol) and diglycerol. Examples of pentaols include, but are not limited to, xylitol. Examples of oligomers having pendant or terminal hydroxyl groups include, but are not limited to, polyether polyols such as polypropylene glycol, polyester polyols, polycarbonate polyols, and polyolefin polyols such as polybutadiene polyol.

In an embodiment, the ionic polyol is a diol, triol, tetraol or pentaol with one or more carboxyl groups, or an oligomer having hydroxyl and carboxyl groups. In an embodiment, the ionic polyol is a dihydroxylcarboxylic acid such as 2,2-di(hydroxymethyl)acetic acid, dimethylolpropionic acid (DMPA), 2,2-bis(hydroxymethyl) butyric acid, or 2,2-di(hydroxymethyl)pentanoic acid. By "ionic polymer," it is meant that the polymer that contains an ionic functional group.

In an embodiment, the pendant group is a side group of polymers without a linear chain structure that extend from and are attached to the main chain, for example, branched, hyper-branched, star, and dendritic polymer groups. By "branched polymer" it is meant that the polymer has secondary polymer chains branching off a main chain. "Hyperbranched" polymer means a polymer that is highly and densely branched with an irregular branched structure, and the term includes polymers having a regular branched structure that are referred to as "dendrimer polymers". "Dendrimer polymer" or "dendritic polymer" means a polymer that resembles a tree-like structure with densely branched structures that typically consists of a core from which branches extend and with a large number of end groups. A "star" polymer refers to a branched polymer in which a single branch has multiple linear chains or arms radiating outward.

Branched polyurethanes can be produced, for example, by reacting a diisocyanate with excess amounts of triols, pentaols and other multifunctional polyols (e.g., having a hydroxyl functionality of greater than 2), and their mixtures with diols, and/or with ionic polyols. Methods for producing branched polyurethanes are known in the art, as described, for example, in U.S. Pat. Nos. 4,801,553, 4,895,894, 5,863,980, US 2010/0222448, U.S. Pat. Nos. 4,861,826, 5,334,690, 6,583,215, 6,642,303, 6,784,243 and US 2011/0306724.

Hyperbranched, star and dendritic polyurethanes with pendant carboxyl and hydroxyl groups can be prepared, for example, by step-growth polymerization of triisocyanates with multifunctional polyols and ionic polyols. Methods for producing hyperbranched polyurethanes are known in the art, as described, for example, in U.S. Pat. Nos. 6,927,271, 7,863,375, 8,044,140 and US 2012/0183692.

Examples of commercially available polyurethane polymers include, but are not limited to, Impranil^{®} (available from Covestro Deutschland AG), Neboplast^{®} (available from Safic-Alcan Necarbo BV), and Daotan^{®} (available from Allnex Netherland BV).

In one embodiment, the water-dispersible polyurethane polymer can include one or more pendant carboxyl groups, and will undergo an optional crosslinking reaction through the reaction of the pendant carboxyl groups with a cross-linking agent. To prevent a premature crosslinking reaction from occurring upon mixing the components of an inkjet ink composition which includes a polyurethane polymer having pendant carboxyl group(s) and a crosslinking agent (and thus stabilize the ink composition during a storage period and prior to use), the carboxyl groups of the polyurethane polymer is neutralized.

To neutralize the carboxyl groups, the polyurethane polymer can be reacted with a neutralizing agent (e.g., a base) to form a carboxylate salt. A neutralizing agent can be used alone or in combination of two or more kinds. The neutralizing agent as used herein is capable of being disengaged from the carboxyl group and, in an embodiment, removed from the ink composition at the desired time to allow the crosslinking reaction to proceed. Examples of suitable neutralizing agents include, but are not limited to, ammonia and tertiary amines.

In an embodiment, the neutralizing agent is ammonia such that neutralized carboxyl groups are in the form of an ammonium carboxylate salt. An ammonia neutralizing agent can be disengaged from the carboxyl group and removed from the ink composition, for example, by evaporation upon exposure of the composition to atmospheric conditions with or without the application of heat, to allow the crosslinking reaction to proceed.

In an embodiment, the neutralizing agent is a tertiary amine such that neutralized carboxyl groups are in the form of a tertiary amine carboxylate salt. Any tertiary amine can be used as a neutralizing agent as long as the tertiary amine can be disengaged from the carboxyl group and removed from the ink composition, to allow the crosslinking reaction to proceed, for example, by evaporation from the composition upon exposure to atmospheric conditions with or without the application of heat. Nonlimiting examples of tertiary amines include triethylamine (TEA), 2-dimethylaminoethanol (DMEA), triethanolamine (TEA-OH), trimethylamine, dimethylethylamine (DMEA), diethylmethylamine (DEMA), dimethyl-isopropylamine (DMIPA), dimethyl-n-propylamine (DMPA), N-methylpyrrolidine, N,N-diisopropylethanolamine, N,N-diisopropylethylamine, N,N-diethylethanolamine, N-tributylamine, N-butyl-N-ethyl-N-methylamine, N-isopentyldimethylamine, N,N-diethylmethylamine, N-amyldimethylamine, N-methylmorpholine, N,N-dimethylcyclohexylamine, N,N-dimethylisobutylamine, N,N-dimethyl-2-(2-aminoethoxyethanol), N-methyldiethanolamine, N,N-dimethylbenzylamine, tri-n-butylamine, among others.

In another embodiment, the water-dispersible polyurethane polymer includes one or more pendant carboxyl groups that can be neutralized by reaction with an alkali metal hydroxide, such that neutralized carboxyl groups are in the form of an alkali metal (e.g., sodium, lithium, potassium) carboxylate salt. Examples of alkali metal hydroxides include, but are not limited to, lithium hydroxide, potassium hydroxide and sodium hydroxide.

In an embodiment, the polyurethane polymer has a glass transition temperature (Tg) of at least -50°C, and preferably at least 0°C. In an embodiment, the Tg of the polyurethane polymer is at most 120°C, and preferably at most 50°C. In an embodiment, the Tg of the polyurethane polymer is -50°C to 120°C, and preferably 0°C to 50°C.

In an embodiment, the polyurethane polymer has a number average molecular weight (Mn) of at least 1,000, and preferably at least 2,000. In an embodiment, the Mn of the polyurethane polymer is at most 1,000,000, and preferably at most 100,000. In an embodiment, the Mn of the polyurethane polymer is 1,000 to 1,000,000, and preferably 2,000 to 100,000.

In an embodiment, the amount (by weight) of the water-dispersible polyurethane polymer having pendant hydroxyl groups and optional pendant neutralized carboxyl group(s) in the ink composition of the invention is at least 1, at least 2, at least 5, at least 10, and at least 15, % by weight. In an embodiment, the amount of the polyurethane polymer is at most 40, such as at most 35, at most 30, at most 25, and at most 20, % by weight. This includes embodiments in which the amount of the polyurethane polymer in the ink composition of the invention is 1 to 40% by weight, such as 2 to 35, 5 to 30, 10 to 25, and 15 to 20, % by weight.

A polyurethane polymer used in the ink composition of the invention can comprise one or more embodiments described herein.

### Blocked crosslinking agent

As used herein, the terms "crosslinking agent" and "crosslinker" are used interchangeably.

In an embodiment, the ink composition of the invention includes a crosslinking agent capable of reaction with a hydroxyl group of the polyurethane polymer.

Suitable crosslinking agents capable of undergoing a reaction with a hydroxyl group of the polyurethane polymer include, but are not limited to, water-dispersible blocked isocyanate compounds.

Examples of blocked isocyanates are known in the art and include, but are not limited to, lactam blocked isocyanate, such as ε-caprolactam, δ-valerolactam, or γ-butyrolactam blocked isocyanate, pyridine blocked isocyanate, such as 2-hydroxy pyridine blocked isocyanate, oxime blocked isocyanate, such as formaldoxime, acetaldoxime, acetone oxime, cyclohexanone oxime, methyl isobutyl ketoxime or methyl ethyl ketoxime blocked isocyanate, azole blocked isocyanate, such as pyrazole, carbazole, triazole, imidazole, thiazole, oxazole, and 3,5-dimethyl pyrazole blocked isocyanate, malonate blocked isocyanate, such as dimethyl or diethyl malonate blocked isocyanate, phenol blocked isocyanate, such as cresol, ethyl phenol, butyl phenol or nonyl phenol blocked isocyanate, alcohol blocked isocyanate, such as propanol or butanol blocked isocyanate, mercaptan blocked isocyanate, such as butyl mercaptan, or dodecyl mercaptan blocked isocyanate, uretdione blocked isocyanate, acetanilide blocked isocyanate, sebacate blocked isocyanate, such as bis(2,2,6,6-tetrametil-4-piperidil)sebacate, polymer blocked isocyanate, and mixture thereof. Pyrazole blocked isocyanates, in particular 3,5-dimethyl pyrazole blocked isocyanate, are preferably used in the ink composition of the present invention.

The crosslinking reaction can proceed when the blocking agent of the isocyanate compound (crosslinker) is removed, for example, at an elevated temperature. The temperature at which the reaction to dissociate the blocking agent, or specifically the deblocking reaction, becomes prominent (hereinafter referred to as "deblocking temperature") can be adjusted based on the type of the blocking agent, type of the isocyanate compound to be blocked, and so on. While the specific level of this deblocking temperature is not limited in any way, the deblocking temperature is generally from 65° to 135°C.

Examples of commercially available blocked isocyanate compounds include, but are not limited to, Imprafix^{®} (available from Covestro Deutschland AG), and Tanalink^{®} (available from Tanatex Chemicals B.V.).

The amount (by weight) of the crosslinking agent in the ink composition is at least 1.0, at least 2.0, and at least 5.0, % by weight. In an embodiment, the amount (by weight) of the crosslinking agent is at most 20, such as at most 15, and at most 10, % by weight. This includes embodiments in which the amount of the crosslinking agent in the ink composition of the invention is 1 to 20% by weight, such as 2 to 15, and 5 to 10, % by weight.

In an embodiment, the crosslinking reaction between a crosslinking agent and hydroxyl group(s) of the polyurethane polymer can be facilitated by heat. For example, in some embodiments, the ink composition of the invention can be applied to a substrate and then dried, whereupon the crosslinking agent and hydroxyl group(s) undergo a crosslinking reaction. In an embodiment, the crosslinking reaction can be facilitated by applying heat to the ink after the application or during the drying process.

### Fluid carrier

The aqueous ink compositions of the present invention comprise a fluid carrier which, in an embodiment, comprises water and optionally one or more organic co-solvents, which can be water-soluble organic co-solvents, water-miscible organic co-solvents, or a combination thereof. The organic co-solvents can be added either alone or in combination.

In an embodiment, the organic co-solvents are humectants, which can reduce the rate of evaporation of the water component and prevent an ink composition from drying out or crusting in the nozzles of the printhead to minimize clogging of the nozzles.

In a further embodiment, the organic co-solvents can enhance solubility of the components in the ink composition of the invention, and facilitate penetration of a printed ink composition into a substrate.

Suitable water-soluble and water-miscible organic solvents include, but are not limited to, alcohols (e.g., methanol, ethanol, propanol, isopropyl alcohol, and butanol), ketones and ketone alcohols (e.g., acetone and diacetone alcohol, among others), ethers (e.g., tetrahydrofuran, dioxane, and alkylethers, among others), nitrogen-containing solvents (e.g., 2-pyrrolidone, and N-methyl-2-pyrrolidone, among others), sulfur-containing solvents (e.g., 2,2'-thiodiethanol, dimethylsulfoxide, tetramethylene sulfone, and sulfolane, among others), and sugars and derivatives thereof (e.g., glucose, oxyethylene adducts of glycerin, and oxyethylene adducts of diglycerin, among others).

In an embodiment, the amount (by weight) of the organic co-solvent in the ink composition of the present invention is at least 1, such as at least 2, and at least 5, % by weight. In an embodiment, the amount (by weight) of the organic co-solvent is at most 15, such as at most 14, at most 14, and at most 10, % by weight. This includes embodiments in which the amount of the organic co-solvent in the composition is 1 to 15% by weight, such as 5 to 10% by weight.

An organic co-solvent used in the ink composition of the invention can comprise one or more embodiments described herein.

In an embodiment, the amount (by weight) of water in the ink composition of the present invention is at least 5, at least 8, at least 10, at least 15, at least 20, and at least 25, % by weight. In an embodiment the amount (by weight) of water is at most 95, at most 85, at most 80, at most 75, at most 70, at most 65, and at most 60, % by weight. This includes embodiments in which the amount of water in the composition is 5 to 95% by weight, such as 10 to 80, and 20 to 70, % by weight. The range of water in the composition is typically 15 to 75% by weight, and more typically 25 to 60% by weight.

### Polyol

The ink composition according to the present invention comprises a polyol selected from the group consisting of ethylene glycol, 1,3-budandiol, 1,5-pentandiol, triethylene glycol, and trimethylol propane.

A polyol used in the ink composition of the invention can comprise one or more embodiments described herein.

In an embodiment, the amount (by weight) of polyol in the ink composition of the present invention is at least 1, at least 2, at least 3, and at least 5,% by weight. In an embodiment the amount (by weight) of polyol is at most 30, at most 25, at most 20, and at most 15, % by weight. This includes embodiments in which the amount of polyol in the ink composition of the present invention is 1 to 30% by weight, such as 2 to 25, and 3 to 20, % by weight. The range of polyol in the composition is typically 5 to 15% by weight. Most preferably, the amount (by weight) of polyol in the ink composition of the present invention is 6%, 8%, 10%, 12%, 14%, by weight, or any value there in between.

### Additives

In an embodiment, the ink composition of the invention can optionally include one or more additives that are compatible with the other components of the composition. Additives can be included in the composition to impart any number of desired properties, including, but not limited to, stability, smear resistance, viscosity, surface tension, coating penetration, optical density, color depth, adhesion, highlighter resistance, and crust resistance, among others. Suitable additives for such uses and the amounts of such additives used are known and conventionally used in the art.

Examples of additives include, but are not limited to, defoamers, preservatives, surfactants, pH modifiers, viscosity modifiers, humectants, penetrating agents, and additional polymers, among others.

In an embodiment, defoamers can be included in the ink composition of the present invention to inhibit the formation of foam. Examples of suitable defoamers include, but are not limited to, silicone-based or non-silicone defoamers. Commercially available defoamers include, but are not limited to, Dow Corning^{®} 71 and Dow Corning^{®} 74 (from Dow Corning), TegoAirex^{®} 901W, 902W, 904W from Evonik Industries, Tergitol^{®} L-61, L-62, L-64 and L-101 (from Dow Chemical). A typical amount (by weight) of defoamer included in the composition is 0.1 to 3% by weight.

In an embodiment, preservatives, such as biocides and fungicides, can be included in the ink composition of the present invention to inhibit the growth of microorganisms. Examples of suitable preservatives include, but are not limited to, sodium benzoate, pentachlorophenol sodium, 2-pyridinethiol-1-oxide sodium, sodium sorbate, sodium dehydroacetate, benzisothiazolinone, 1,2-dibenzothiazolin-3-one, 1-(3-chlorallyl)-3,5,7-triaza-1 azoniaadamantane chloride (CTAC), methylisothiazolinone, and chloromethylisothiazolinone, among others. Commercially available biocides include UCARCIDE^{®} 250 (available from Union Carbide Company), Proxel^{®} CRL, Proxel^{®} BDN, Proxel^{®} GXL, Proxel^{®}XL-2, Proxel^{®} TN (available from Arch Chemicals, Smyrna, Ga.), Dowicil^{®} (Dow Chemical, Midland, Mich.), Nuosept^{®} (Huls America, Inc., Piscataway, N.J.), Omidines^{®} (Olin Corp., Cheshire, Conn.), Nopcocides^{®} (Henkel Corp., Ambler, Pa.), Troysan^{®} (CO (Troy Chemical Corp., Newark, N.J.), and XBINX^{®} (PMC Specialties Group, Inc., Cincinnati, Ohio). The preservatives may be used alone or in combination. A typical amount (by weight) of preservative included in the composition is 0.1 to 1.5% by weight.

In an embodiment, surfactants can be included to reduce surface tension of the ink composition of the present invention. The surfactant can be an anionic surfactant, nonionic surfactant or cationic surfactant. Suitable surfactants can include, but are not limited to, those listed below and in U.S. Pat. Nos. 5,116,409, 5,861,447 and 6,849,111. Exemplary surfactants are commercially available under various trade names, such as the PLURONIC^{®} series (BASF Corporation, Parsippany, N.J.), TETRONIC^{®} series (BASF Corporation, Parsippany, N.J.), ARQUAD^{®} series (Akzo Chemical Inc., Chicago, III.), TRITON^{®} series (Union Carbide Corp., Danbury, Conn.), SURFONIC^{®} series (Texaco Chemical Company, Houston, Tex.), ETHOQUAD^{®} series (Akzo Chemical Inc., Chicago, III.), ARMEEN^{®} series (Akzo Chemical Inc., Chicago, III.), ICONOL^{®} series (BASF Corporation, Parsippany, N.J.), SURFYNOL^{®} series (Air Products and Chemicals, Inc. Allentown, Pa.), and ETHOMEEN^{®} series (Akzo Chemical Inc., Chicago, III.), among others. The surfactants can be used alone or in combination. A typical amount (by weight) of surfactant included in the composition is 0.1 to 10% by weight.

In an embodiment, pH modifiers can be included to adjust or buffer the ink composition of the present invention to a desired pH. Suitable pH modifiers include, but are not limited to, alkali hydroxides, alkali carbonates and bicarbonates, triethylamine, dimethylethanolamine, triethanolamine, mineral acids, hydrochloric acid, and sulfuric acid, among others. The pH modifiers can be used alone or in combination. A typical amount (by weight) of pH modifier in the composition is 0.1 to 2% by weight. In an embodiment, the ink composition of the present invention has a pH of 7 to 10 at 25°C. More preferably, the pH is comprised between 7 and 9. Most preferably, the pH is equal to 7.0, 7.2, 7.4, 7.6, 7.8, 8.0, 8.2, 8.4, 8.6, 8.8 or 9.0, or any value there in between.

In an embodiment, the ink composition of the present invention can include one or more viscosity modifiers. Examples of suitable viscosity modifiers include, but are not limited to, resin compounds, alginic acid compounds, polyvinyl alcohol, hydroxypropyl cellulose, carboxymethyl cellulose, hydroxyethyl cellulose, methyl cellulose, salts of polyacrylic acid, polyvinyl pyrrolidone, gum arabic and starch, hydrophobic ethoxylated urethanes (HEURs), hydrophobically modified alkali swellable emulsions (HASEs), alkali swellable emulsions (ASEs), among others. The viscosity modifiers can be used alone or in combination. A typical amount (by weight) of viscosity modifier in the composition is 0.5 to 10% by weight. In an embodiment, the ink composition of the present invention has a viscosity of 1 mPa.s to 15 mPa.s as determined with a Brookfield viscometer at 25°C. More preferably, said viscosity is comprised between 2 mPa.s and 14 mPa.s. Most preferably, said viscosity is 2 mPa.s, 4 mPa.s, 6 mPa.s, 8 mPa.s, 10 mPa.s, 12 mPa.s, 14 mPa.s or any value there in between.

In some embodiments, the ink composition of the present invention can optionally include one or more conductive agents. In some embodiments, the conductive agent can be a salt (e.g., an organic salt or an inorganic salt). For example, the salt can be a quaternary phosphonium salt (e.g., a tetraalkylphosphonium or tetraarylphosphonium salt), a quaternary ammonium salt (e.g., a tetraalkylammonium or tetraarylammonium salt), an imidazolium salt, or an alkali salt (e.g., a Li, Na, K, or Cs salt).

In general, the ink composition of the present invention can have any suitable conductivity. In some embodiments, the ink composition can have a conductivity ranging from at least about 0 µS/cm (e.g., at least about 10 µS/cm, at least about 50 µS/cm, at least about 100 µS/cm, at least about 200 µS/cm, at least about 300 µS/cm, at least about 400 µS/cm at least about 500 µS/cm, or at least about 1000 µS/cm) to at most about 8000 µS/cm (e.g., at most about 7000 µS/cm, at most about 6000 µS/cm, at most about 5000 µS/cm, at most about 4000 µS/cm, at most about 3000 µS/cm, at most about 2000 µS/cm, or at most about 1000 µS/cm). For example, when the ink composition is designed for use in a continuous inkjet printing process, the ink composition can have a suitable conductivity (e.g., 100-8000 µS/cm) to enable the ink composition to be printed in this process. As another example, when the ink composition is designed for use in a thermal inkjet printing process, the ink composition can have zero conductivity since conductivity is not required in this printing process.

In an embodiment, in addition to an organic co-solvent of the fluid carrier component which can function as a humectant, one or more humectants can be included in the ink composition of the present invention to reduce the rate of evaporation of the water component and prevent an ink composition from drying out in the nozzles of the printhead, which can occur during periods of latency, to minimize clogging of the nozzles. Humectants can be selected from materials having high hygroscopicity and water-solubility. Examples of suitable humectants include, but are not limited to, lactams (e.g., 2-pyrrolidone, urea compounds such as urea, 1,3-dimethylimidazolidinone), saccharides (e.g., sorbitol), 1,4-cyclohexanedimethanol, 1-methyl-2-piperidone, N-ethylacetamide, 3-amino-1,2-propanediol, ethylene carbonate; butyrolacetone and Liponic EG-1, among others. There are no particular limitations on the amount used of the humectant. A typical amount (by weight) of humectant in the composition is 0.5 to 30% by weight.

In an embodiment, penetrating agents can be included to reduce bleeding of an ink composition of the present invention when applied to a print substrate such as paper, among others. Examples of suitable penetrating agents include, but are not limited to, alkyl alcohols having 1 to 4 carbon atoms (e.g., ethanol), formamide, acetamide, dimethylsulfoxide, sorbitol and sulfolane, among others. The penetrating agents may be used alone or in combination. A typical amount (by weight) of penetrating agents in the composition is 1 to 20% by weight.

In an embodiment, the ink composition of the present invention can include additional polymers (other than the polyurethane polymer) to enhance water-fastness, rub and light fastness of an ink image applied to and dried on a print substrate. Examples of such polymers include, but are not limited to, polyvinyl alcohols, polyesters, polyestermelamines, styrene/acrylic acid copolymers, styrene/maleic acid copolymers, styrene/maleic acid/alkyl acrylate copolymers, styrene/methacrylic acid copolymers, styrene/methacrylic acid/alkyl acrylate copolymers, styrene/maleic half ester copolymers, vinyl naphthalene/acrylic acid copolymers, vinyl naphthalene/maleic acid copolymers, and salts thereof, among others. Such additional polymers can be used alone or in combination. A typical amount (by weight) of such additional polymers that can be included in the composition is 0.1 to 20% by weight.

Other additives that can be included in the ink composition of the present inventions include, but are not limited to, antioxidants, ultraviolet absorbers, chelating agents, electric conductivity adjusters, oxygen absorbers, anticoagulation agents, anti-curling agents, and fragrances, among others. The amounts of such additives for use in aqueous ink compositions are known and conventionally used in the art.

### Printing Process and Product

In general, the ink composition of the present invention can be used in any suitable printing process, including a continuous inkjet (CIJ) printing process, and a drop-on-demand printing process (e.g., thermal inkjet (TIJ) printing process or a piezo printing process). In some embodiments, the ink composition can be used in a printing process that includes ejecting the ink composition (either continuously or on demand) from a printhead in an inkjet printer onto a substrate to form an image.

Examples of suitable substrates include, but are not limited to, plain papers, bonded papers, coated papers, transparency materials, and textile materials. The ink composition of the present invention is especially applicable to textile substrates.

In some embodiments, in a continuous inkjet printing process, a continuous stream of conductive ink droplets can be ejected from one or more nozzles of a printhead of an inkjet printer. The droplets are electrostatically deflected to address several vertical pixels as the substrate moves relative to the nozzles. CIJ inks generally have a suitable conductivity and allows the droplets to be deflected. The process of jetting ink droplets continuously and directing unneeded drops to the gutter allows the CIJ systems to utilize fast evaporating solvents (e.g., those having a relative evaporation rate (RER) greater than 1 as determined by the ASTM method D3359 and relative to n-butyl acetate) without concern for decap (i.e., the ability to remain in the fluid condition in a printhead nozzle opening on exposure to air) and nozzle clogging, as the nozzles are effectively never idle during operation.

In some embodiments, in a continuous inkjet printing process, a continuous ink stream ejected from a printhead is deviated by at least one electrode to which a static or sinusoidal high voltage is applied. Most of the ink stream is not printed and is directed to an ink recovery gutter. During printing, segments of the ink stream are sampled asynchronously, deviated differently depending on their length (the length providing a means of varying the distribution of embedded electrical charge per unit length) and directed towards the substrate. These segments, which can be transformed into spherical drops under the effect of the surface tension, are separated from the jet before they are deflected such that their trajectory is different from the ink stream.

In some embodiments, in a drop-on-demand printing process, inks can be jetted by either thermal inkjet cartridges or piezo drop-on-demand printheads. To print inks, an ink is loaded into a reservoir where it is either pumped or fed by gravity to a jetting chamber of a cartridge or printhead. In the case of the thermal inkjet cartridge, a liquid ink is ejected from a printhead by being rapidly heated, causing a rapid phase change from liquid to gas, thus causing a rapid volume expansion and subsequently causing a droplet to eject from an orifice. In the case of a piezo-based device, a liquid ink is ejected from a printhead by activation of a piezo transformer (PZT), which causes a pressure wave to be exerted upon the ink and an ink droplet can be ejected from an orifice. Both devices are referred to as drop-on-demand since a droplet of ink is ejected only when a heater or PZT material is activated. Each cartridge or printhead contains an array of several orifices across its width. Activation of each orifice in such an array is performed methodically by the printer such that an image is formed dropwise on a substrate, which is positioned a short distance from the orifice array. The printers are designed such that an orifice array and a substrate move relative to one another in order to form an image.

According to an embodiment, the present invention relates to a printing process comprising
- a printing step applying the ink composition of the present invention to a substrate,
- a fixing/drying step by applying heat to chemically reacting the crosslinking agent and the polyurethane binder of the ink composition.

According to a preferred embodiment of the printing process of the present invention, the substrate is not subjected to a pre-treatment step with a pre-treatment solution before the printing step.

According to a preferred embodiment of the printing process of the present invention, the substrate is not subjected to a post-treatment step with a post-treatment solution after the printing step.

In an embodiment, the substrate is a textile material, such as for example wool, cotton, silk, polypropylene, polyethylene, polyamides such as aliphatic polyamides (i.e. nylon-6, nylon-6,6) and aromatic polyamides (i.e. Kevlar^{®}, Nomex^{®}), viscose, cellulose or polyester.

The following examples illustrate a number of embodiments of the present invention that are presently known. However, it is to be understood that the following are only exemplary or illustrative of the application of the principles of the present invention. Numerous modifications and alternative compositions, methods, and systems may be devised by those skilled in the art without departing from the spirit and scope of the present invention. The appended claims are intended to cover such modifications and arrangements. Thus, while the present invention has been described above with particularity, the following examples provide further detail in connection with what are presently deemed to be the acceptable embodiments.

### EXPERIMENTAL PART

Exemplary aqueous inkjet ink compositions were prepared comprising a pigment dispersion, a surfactant, a biocide, a humectant, and different combinations of a binder, a crosslinking agent and a polyol as described in the following tables 1 to 6.

More in particular, the compositions comprised the following commercially available ingredients.

| | |
|---|---|
| Diamond D80K | Black Pigment Dispersion comprising 15% of PB7, Lubrizol Advanced Materials UK Limited, UK |
| Sabosol DOS70 | Surfactant, sodium diisooctyl sulfosuccinate, Sabo SpA, Italy |
| Acticide MBS | Biocide, Mixture of 5-chloro-2-methyl-4-isothiazolin-3-one and 2-methyl-4-isothiazolin-3-one, Thor Specialties Srl, Italy |
| Daotan TW6425/40WA | Binder, polyester-based polyurethane aqueous dispersion, Allnex GmbH |
| Impranil DLT-C | Binder, aliphatic, polyester-polycarbonate based anionic polyurethane aqueous dispersion, Covestro Deutschland AG |
| Neboplast PEU 3500 | Binder, aliphatic polyurethane aqueous dispersion, Safic-Alcan Necarbo BV, Netherland |
| Imprafix 2794 | Crosslinking agent, waterbased aliphatic blocked polyisocyanate, Covestro Deutschland AG |
| Tanalink PCI | Crosslinking agent, waterbased aliphatic blocked isocyanate, Tanatex Chemicals B.V. |

**TABLE 1**

| | Composition | 1 | 2 | 3 | 4 | 5 | 6 | 7 | 8 | 9 | 10 | 11 |
|---|---|---|---|---|---|---|---|---|---|---|---|---|
| Pigment Dispersion | Diamond D80K | 40 | 40 | 40 | 40 | 40 | 40 | 40 | 40 | 40 | 40 | 40 |
| Surfactant | Sabosol DOS70 | 0,5 | 0,5 | 0,5 | 0,5 | 0,5 | 0,5 | 0,5 | 0,5 | 0,5 | 0,5 | 0,5 |
| Biocide | Acticide MBS | 0,5 | 0,5 | 0,5 | 0,5 | 0,5 | 0,5 | 0,5 | 0,5 | 0,5 | 0,5 | 0,5 |
| Humectant | Urea | 15 | 15 | 15 | 15 | 15 | 15 | 15 | 15 | 15 | 15 | 15 |
| Water | | qs 100 | qs 100 | qs 100 | qs 100 | qs 100 | qs 100 | qs 100 | qs 100 | qs 100 | qs 100 | qs 100 |
| Binder | Daotan TW6425/40WA | 18 | 18 | 18 | 18 | 18 | 18 | 18 | 18 | 18 | 18 | 18 |
| Crosslinking agent | Imprafix 2794 | 8 | 8 | 8 | 8 | 8 | 8 | 8 | 8 | 8 | 8 | 8 |
| Polyol | Ethylene glycol | 14 | - | - | - | - | - | - | - | - | - | - |
| | 1,2-Propylene glycol | - | 14 | - | - | - | - | - | - | - | - | - |
| | 1,3-Propylene glycol | - | - | 14 | - | - | - | - | - | - | - | - |
| | 1,3-Butandiol | - | - | - | 14 | - | - | - | - | - | - | - |
| | Glycerol | - | - | - | - | 14 | - | - | - | - | - | - |
| | 1,5-Pentandiol | - | - | - | - | - | 14 | - | - | - | - | - |
| | PEG 1500 | - | - | - | - | - | - | 5 | - | - | - | - |
| | Diethylene glycol | - | - | - | - | - | - | - | 14 | - | - | - |
| | Triethylene glycol | - | - | - | - | - | - | - | - | 14 | - | - |
| | Ethoxylated glycerin | - | - | - | - | - | - | - | - | - | 10 | - |
| | Trimethylol propane | - | - | - | - | - | - | - | - | - | - | 7 |

**TABLE 2**

| | Composition | 12 | 13 | 14 | 15 | 16 | 17 | 18 | 19 | 20 | 21 | 22 |
|---|---|---|---|---|---|---|---|---|---|---|---|---|
| Pigment Dispersion | Diamond D80K | 40 | 40 | 40 | 40 | 40 | 40 | 40 | 40 | 40 | 40 | 40 |
| Surfactant | Sabosol DOS70 | 0,5 | 0,5 | 0,5 | 0,5 | 0,5 | 0,5 | 0,5 | 0,5 | 0,5 | 0,5 | 0,5 |
| Biocide | Acticide MBS | 0,5 | 0,5 | 0,5 | 0,5 | 0,5 | 0,5 | 0,5 | 0,5 | 0,5 | 0,5 | 0,5 |
| Humectant | Urea | 15 | 15 | 15 | 15 | 15 | 15 | 15 | 15 | 15 | 15 | 15 |
| Water | | qs 100 | qs 100 | qs 100 | qs 100 | qs 100 | qs 100 | qs 100 | qs 100 | qs 100 | qs 100 | qs 100 |
| Binder | Daotan TW6425/40WA | 18 | 18 | 18 | 18 | 18 | 18 | 18 | 18 | 18 | 18 | 18 |
| Crosslinking agent | Tanalink PCI | 8 | 8 | 8 | 8 | 8 | 8 | 8 | 8 | 8 | 8 | 8 |
| Polyol | Ethylene glycol | 14 | - | - | - | - | - | - | - | - | - | - |
| | 1,2-Propylene glycol | - | 14 | - | - | - | - | - | - | - | - | - |
| | 1,3-Propylene glycol | - | - | 14 | - | - | - | - | - | - | - | - |
| | 1,3-Butandiol | - | - | - | 14 | - | - | - | - | - | - | - |
| | Glycerol | - | - | - | - | 14 | - | - | - | - | - | - |
| | 1,5-Pentandiol | - | - | - | - | - | 14 | - | - | - | - | - |
| | PEG 1500 | - | - | - | - | - | - | 5 | - | - | - | - |
| | Diethylene glycol | - | - | - | - | - | - | - | 14 | - | - | - |
| | Triethylene glycol | - | - | - | - | - | - | - | - | 14 | - | - |
| | Ethoxylated glycerin | - | - | - | - | - | - | - | - | - | 10 | - |
| | Trimethylol propane | - | - | - | - | - | - | - | - | - | - | 7 |

**TABLE 3**

| | Composition | 23 | 24 | 25 | 26 | 27 | 28 | 29 | 30 | 31 | 32 | 33 |
|---|---|---|---|---|---|---|---|---|---|---|---|---|
| Pigment Dispersion | Diamond D80K | 40 | 40 | 40 | 40 | 40 | 40 | 40 | 40 | 40 | 40 | 40 |
| Surfactant | Sabosol DOS70 | 0,5 | 0,5 | 0,5 | 0,5 | 0,5 | 0,5 | 0,5 | 0,5 | 0,5 | 0,5 | 0,5 |
| Biocide | Acticide MBS | 0,5 | 0,5 | 0,5 | 0,5 | 0,5 | 0,5 | 0,5 | 0,5 | 0,5 | 0,5 | 0,5 |
| Humectant | Urea | 15 | 15 | 15 | 15 | 15 | 15 | 15 | 15 | 15 | 15 | 15 |
| Water | | qs 100 | qs 100 | qs 100 | qs 100 | qs 100 | qs 100 | qs 100 | qs 100 | qs 100 | qs 100 | qs 100 |
| Binder | Impranil DLC-T | 18 | 18 | 18 | 18 | 18 | 18 | 18 | 18 | 18 | 18 | 18 |
| Crosslinking agent | Imprafix 2794 | 8 | 8 | 8 | 8 | 8 | 8 | 8 | 8 | 8 | 8 | 8 |
| Polyol | Ethylene glycol | 14 | - | - | - | - | - | - | - | - | - | - |
| | 1,2-Propylene glycol | - | 14 | - | - | - | - | - | - | - | - | - |
| | 1,3-Propylene glycol | - | - | 14 | - | - | - | - | - | - | - | - |
| | 1,3-Butandiol | - | - | - | 14 | - | - | - | - | - | - | - |
| | Glycerol | - | - | - | - | 14 | - | - | - | - | - | - |
| | 1,5-Pentandiol | - | - | - | - | - | 14 | - | - | - | - | - |
| | PEG 1500 | - | - | - | - | - | - | 5 | - | - | - | - |
| | Diethylene glycol | - | - | - | - | - | - | - | 14 | - | - | - |
| | Triethylene glycol | - | - | - | - | - | - | - | - | 14 | - | - |
| | Ethoxylated glycerin | - | - | - | - | - | - | - | - | - | 10 | - |
| | Trimethylol propane | - | - | - | - | - | - | - | - | - | - | 7 |

**TABLE 4**

| | Composition | 34 | 35 | 36 | 37 | 38 | 39 | 40 | 41 | 42 | 43 | 44 |
|---|---|---|---|---|---|---|---|---|---|---|---|---|
| Pigment Dispersion | Diamond D80K | 40 | 40 | 40 | 40 | 40 | 40 | 40 | 40 | 40 | 40 | 40 |
| Surfactant | Sabosol DOS70 | 0,5 | 0,5 | 0,5 | 0,5 | 0,5 | 0,5 | 0,5 | 0,5 | 0,5 | 0,5 | 0,5 |
| Biocide | Acticide MBS | 0,5 | 0,5 | 0,5 | 0,5 | 0,5 | 0,5 | 0,5 | 0,5 | 0,5 | 0,5 | 0,5 |
| Humectant | Urea | 15 | 15 | 15 | 15 | 15 | 15 | 15 | 15 | 15 | 15 | 15 |
| Water | | qs 100 | qs 100 | qs 100 | qs 100 | qs 100 | qs 100 | qs 100 | qs 100 | qs 100 | qs 100 | qs 100 |
| Binder | Impranil DLT-C | 18 | 18 | 18 | 18 | 18 | 18 | 18 | 18 | 18 | 18 | 18 |
| Crosslinking agent | Tanalik PCI | 8 | 8 | 8 | 8 | 8 | 8 | 8 | 8 | 8 | 8 | 8 |
| Polyol | Ethylene glycol | 14 | - | - | - | - | - | - | - | - | - | - |
| | 1,2-Propylene glycol | - | 14 | - | - | - | - | - | - | - | - | - |
| | 1,3-Propylene glycol | - | - | 14 | - | - | - | - | - | - | - | - |
| | 1,3-Butandiol | - | - | - | 14 | - | - | - | - | - | - | - |
| | Glycerol | - | - | - | - | 14 | - | - | - | - | - | - |
| | 1,5-Pentandiol | - | - | - | - | - | 14 | - | - | - | - | - |
| | PEG 1500 | - | - | - | - | - | - | 5 | - | - | - | - |
| | Diethylene glycol | - | - | - | - | - | - | - | 14 | - | - | - |
| | Triethylene glycol | - | - | - | - | - | - | - | - | 14 | - | - |
| | Ethoxylated glycerin | - | - | - | - | - | - | - | - | - | 10 | - |
| | Trimethylol propane | - | - | - | - | - | - | - | - | - | - | 7 |

**TABLE 5**

| | Composition | 45 | 46 | 47 | 48 | 49 | 50 | 51 | 52 | 53 | 54 | 55 |
|---|---|---|---|---|---|---|---|---|---|---|---|---|
| Pigment Dispersion | Diamond D80K | 40 | 40 | 40 | 40 | 40 | 40 | 40 | 40 | 40 | 40 | 40 |
| Surfactant | Sabosol DOS70 | 0,5 | 0,5 | 0,5 | 0,5 | 0,5 | 0,5 | 0,5 | 0,5 | 0,5 | 0,5 | 0,5 |
| Biocide | Acticide MBS | 0,5 | 0,5 | 0,5 | 0,5 | 0,5 | 0,5 | 0,5 | 0,5 | 0,5 | 0,5 | 0,5 |
| Humectant | Urea | 15 | 15 | 15 | 15 | 15 | 15 | 15 | 15 | 15 | 15 | 15 |
| Water | | qs 100 | qs 100 | qs 100 | qs 100 | qs 100 | qs 100 | qs 100 | qs 100 | qs 100 | qs 100 | qs 100 |
| Binder | Neboplast PEU 3500 | 18 | 18 | 18 | 18 | 18 | 18 | 18 | 18 | 18 | 18 | 18 |
| Crosslinking agent | Imprafix 2794 | 8 | 8 | 8 | 8 | 8 | 8 | 8 | 8 | 8 | 8 | 8 |
| Polyol | Ethylene glycol | 14 | - | - | - | - | - | - | - | - | - | - |
| | 1,2-Propylene glycol | - | 14 | - | - | - | - | - | - | - | - | - |
| | 1,3-Propylene glycol | - | - | 14 | - | - | - | - | - | - | - | - |
| | 1,3-Butandiol | - | - | - | 14 | - | - | - | - | - | - | - |
| | Glycerol | - | - | - | - | 14 | - | - | - | - | - | - |
| | 1,5-Pentandiol | - | - | - | - | - | 14 | - | - | - | - | - |
| | PEG 1500 | - | - | - | - | - | - | 5 | - | - | - | - |
| | Diethylene glycol | - | - | - | - | - | - | - | 14 | - | - | - |
| | Triethylene glycol | - | - | - | - | - | - | - | - | 14 | - | - |
| | Ethoxylated glycerin | - | - | - | - | - | - | - | - | - | 10 | - |
| | Trimethylol propane | - | - | - | - | - | - | - | - | - | - | 7 |

**TABLE 6**

| | Composition | 56 | 57 | 58 | 59 | 60 | 61 | 62 | 63 | 64 | 65 | 66 |
|---|---|---|---|---|---|---|---|---|---|---|---|---|
| Pigment Dispersion | Diamond D80K | 40 | 40 | 40 | 40 | 40 | 40 | 40 | 40 | 40 | 40 | 40 |
| Surfactant | Sabosol DOS70 | 0,5 | 0,5 | 0,5 | 0,5 | 0,5 | 0,5 | 0,5 | 0,5 | 0,5 | 0,5 | 0,5 |
| Biocide | Acticide MBS | 0,5 | 0,5 | 0,5 | 0,5 | 0,5 | 0,5 | 0,5 | 0,5 | 0,5 | 0,5 | 0,5 |
| Humectant | Urea | 15 | 15 | 15 | 15 | 15 | 15 | 15 | 15 | 15 | 15 | 15 |
| Water | | qs 100 | qs 100 | qs 100 | qs 100 | qs 100 | qs 100 | qs 100 | qs 100 | qs 100 | qs 100 | qs 100 |
| Binder | Neboplast PEU 3500 | 18 | 18 | 18 | 18 | 18 | 18 | 18 | 18 | 18 | 18 | 18 |
| Crosslinking agent | Tanalink PCI | 8 | 8 | 8 | 8 | 8 | 8 | 8 | 8 | 8 | 8 | 8 |
| Polyol | Ethylene glycol | 14 | - | - | - | - | - | - | - | - | - | - |
| | 1,2-Propylene glycol | - | 14 | - | - | - | - | - | - | - | - | - |
| | 1,3-Propylene glycol | - | - | 14 | - | - | - | - | - | - | - | - |
| | 1,3-Butandiol | - | - | - | 14 | - | - | - | - | - | - | - |
| | Glycerol | - | - | - | - | 14 | - | - | - | - | - | - |
| | 1,5-Pentandiol | - | - | - | - | - | 14 | - | - | - | - | - |
| | PEG 1500 | - | - | - | - | - | - | 5 | - | - | - | - |
| | Diethylene glycol | - | - | - | - | - | - | - | 14 | - | - | - |
| | Triethylene glycol | - | - | - | - | - | - | - | - | 14 | - | - |
| | Ethoxylated glycerin | - | - | - | - | - | - | - | - | - | 10 | - |
| | Trimethylol propane | - | - | - | - | - | - | - | - | - | - | 7 |

The performances of all the ink compositions 1 to 66 were evaluated according to the following methods.

Aging stability was evaluated by measuring the viscosity of the ink compositions at 25°C before and after aging at 50°C for 4 weeks with Brookfield DV2-T viscometer at shear rate of about 264 s⁻¹ according to the following score based on the percentage increase of viscosity:
Very poor = more than 60%
Poor = from 30% to 60%
Acceptable = from 15% to 30%
Good = from 10% to 15%
Very good = less than 10%

Printability was evaluated by printing 50 meters of a 100% cotton poplin fabric with a weight of 103 g/m² (160 cm wide) with a MS JP7 printer with Kyocera KJ4B heads filled with the ink compositions in gray scale mode, 4 passes at 30 kHz. The printability was evaluated according to the following score based on the percentage of lost or deviated nozzles:
Poor = more than 2%
Acceptable = from 0.5% to 2%
Good = less than 0.5%

Wet rubbing fastness was tested on 100% cotton poplin fabric with a weight of 103g/m² according to standard method UNI EN ISO 105 X12:2016 under the following conditions:

| | |
|---|---|
| Rubbing type | Wet |
| Settlement conditions | at least 4 h at 20°C and 65% RH |
| Test conditions | 20°C and 65% RH |
| Instrument | Crockmeter |
| Ankle size | 16 mm |
| Rub pressure | 9 N |
| Imbibition percentage | 95%-100% |
| Rubbing cycles | 10 |

The results were evaluated by comparison with the gray scale prescribed by the standard UNI EN 20105-A03:1996 according to the following score:
Poor = less than 2.5
Acceptable = from 2.5 to 3.5
Good = from 3.5 to 4
Very good = from 4 to 5

Latency was evaluated with the same MS JP7 printer with Kyocera KJ4B heads according to the following score based on the percentage of lost or deviated nozzles after leaving the printing carriage for 45 minutes out of the capping station.
Poor = more than 2%
Acceptable = from 0.5% to 2%
Good = less than 0.5%

The printing process did not include any pre- or post-treatment of the textile substrate, but only included the step of printing the ink composition on the textile substrate and fixing/drying the ink on the textile substrate at 160°C for 3 minutes.

The results are summarized in the following Tables 7 to 12.

**TABLE 7**

| Composition | Aging stability | Printability | Latency | Wet rubbing fastness |
|---|---|---|---|---|
| 1 | Acceptable | Good | Acceptable | Good |
| 2 | Poor | Acceptable | Acceptable | Good |
| 3 | Poor | Acceptable | Acceptable | Good |
| 4 | Very good | Good | Good | Good |
| 5 | Very poor | Good | Good | Good |
| 6 | Very good | Good | Good | Good |
| 7 | Poor | Poor | Acceptable | - |
| 8 | Poor | - | - | - |
| 9 | Acceptable | Acceptable | Acceptable | Good |
| 10 | Very poor | - | - | Good |
| 11 | Good | Acceptable | Good | Good |

**TABLE 8**

| Composition | Aging stability | Printability | Latency | Wet rubbing fastness |
|---|---|---|---|---|
| 12 | Acceptable | Good | Acceptable | Acceptable |
| 13 | Poor | Acceptable | Acceptable | Acceptable |
| 14 | Poor | Acceptable | Acceptable | Acceptable |
| 15 | Very good | Good | Good | Acceptable |
| 16 | Very poor | Good | Good | Acceptable |
| 17 | Very good | Good | Good | Acceptable |
| 18 | Poor | Poor | Acceptable | - |
| 19 | Poor | - | - | - |
| 20 | Acceptable | Acceptable | Acceptable | Acceptable |
| 21 | Very poor | - | - | Acceptable |
| 22 | Good | Acceptable | Good | Acceptable |

**TABLE 9**

| Composition | Aging stability | Printability | Latency | Wet rubbing fastness |
|---|---|---|---|---|
| 23 | Acceptable | Good | Acceptable | Excellent |
| 24 | Poor | Acceptable | Acceptable | Excellent |
| 25 | Poor | Acceptable | Acceptable | Excellent |
| 26 | Very good | Good | Good | Excellent |
| 27 | Very poor | Good | Good | Excellent |
| 28 | Very good | Good | Good | Excellent |
| 29 | Poor | Poor | Acceptable | - |
| 30 | Poor | - | - | - |
| 31 | Acceptable | Acceptable | Acceptable | Excellent |
| 32 | Very poor | - | - | Excellent |
| 33 | Good | Acceptable | Good | Excellent |

**TABLE 10**

| Composition | Aging stability | Printability | Latency | Wet rubbing fastness |
|---|---|---|---|---|
| 34 | Acceptable | Good | Acceptable | Good |
| 35 | Poor | Acceptable | Acceptable | Good |
| 36 | Poor | Acceptable | Acceptable | Good |
| 37 | Very good | Good | Good | Good |
| 38 | Very poor | Good | Good | Good |
| 39 | Very good | Good | Good | Good |
| 40 | Poor | Poor | Acceptable | - |
| 41 | Poor | - | - | - |
| 42 | Acceptable | Acceptable | Acceptable | Good |
| 43 | Very poor | - | - | Good |
| 44 | Good | Acceptable | Good | Good |

**TABLE 11**

| Composition | Aging stability | Printability | Latency | Wet rubbing fastness |
|---|---|---|---|---|
| 45 | Acceptable | Good | Acceptable | Good |
| 46 | Poor | Acceptable | Acceptable | Good |
| 47 | Poor | Acceptable | Acceptable | Good |
| 48 | Very good | Good | Good | Good |
| 49 | Very poor | Good | Good | Good |
| 50 | Very good | Good | Good | Good |
| 51 | Poor | Poor | Acceptable | - |
| 52 | Poor | - | - | - |
| 53 | Acceptable | Acceptable | Acceptable | Good |
| 54 | Very poor | - | - | Good |
| 55 | Good | Acceptable | Good | Good |

**TABLE 12**

| Composition | Aging stability | Printability | Latency | Wet rubbing fastness |
|---|---|---|---|---|
| 56 | Acceptable | Good | Acceptable | Acceptable |
| 57 | Poor | Acceptable | Acceptable | Acceptable |
| 58 | Poor | Acceptable | Acceptable | Acceptable |
| 59 | Very good | Good | Good | Acceptable |
| 60 | Very poor | Good | Good | Acceptable |
| 61 | Very good | Good | Good | Acceptable |
| 62 | Poor | Poor | Acceptable | - |
| 63 | Poor | - | - | - |
| 64 | Acceptable | Acceptable | Acceptable | Acceptable |
| 65 | Very poor | - | - | Acceptable |
| 66 | Good | Acceptable | Good | Acceptable |

**The** results summarized in tables 7 to 12 confirmed that only the compositions comprising the selected polyols, namely ethylene glycol (compositions 1, 12, 23, 34, 45, and 56), 1,3-budandiol (compositions 4, 15, 26, 37, 48, and 59), 1,5-pentandiol (compositions 6, 17, 28, 39, 50, and 61), triethylene glycol (compositions 9, 20, 31, 42, 53, and 64), and trimethylol propane (compositions 11, 22, 33, 44, 55, and 66) got an evaluation at least acceptable in all the evaluated performances.

**The** best results were obtained with 1,3-budandiol (compositions 4, 15, 26, 37, 48, and 59), and 1,5-pentandiol (compositions 6, 17, 28, 39, 50, and 61).

It is understood that, given the above description of the embodiments of the invention, various modifications may be made by one skilled in the art. Such modifications are intended to be encompassed by the claims below.

## Claims

1. An aqueous ink composition comprising a pigment, a polyurethane binder, a blocked crosslinking agent, and a polyol, wherein said polyol is selected from the group consisting of ethylene glycol, 1,3-budandiol, 1,5-pentandiol, triethylene glycol, and trimethylol propane.

2. The aqueous ink composition according to claim 1, wherein said polyurethane binder is a polyurethane polymer comprising pendant hydroxyl groups attached to the backbone of the polymer.

3. The aqueous ink composition according to claim 2, wherein said polyurethane polymer further comprises pendant neutralized carboxyl groups attached to the backbone of the polymer.

4. The aqueous ink composition according to claim 1, wherein said ink composition comprises an amount of said polyurethane binder ranging from 1% to 40% by weight, preferably from 2% to 35% by weight, more preferably from 5% to 30% by weight, and even more preferably from 10% to 25% by weight.

5. The aqueous ink composition according to claim 1, wherein said blocked crosslinking agent is capable of reaction with a hydroxyl group of the polyurethane binder.

6. The aqueous ink composition according to claim 1, wherein said blocked crosslinking agent is a water-dispersible blocked isocyanate compound.

7. The aqueous ink composition according to claim 1, wherein said blocked crosslinking agent is selected from the group consisting of lactam blocked isocyanate, pyridine blocked isocyanate, oxime blocked isocyanate, azole blocked isocyanate, malonate blocked isocyanate, phenol blocked isocyanate, alcohol blocked isocyanate, mercaptan blocked isocyanate, uretdione blocked isocyanate, acetanilide blocked isocyanate, sebacate blocked isocyanate, polymer blocked isocyanate, and mixture thereof.

8. The aqueous ink composition according to claim 1, wherein said ink composition comprises an amount of said blocked crosslinking agent ranging from 1% to 20% by weight, preferably from 2% to 15% by weight, and more preferably from 5% to 10% by weight.

9. The aqueous ink composition according to claim 1, wherein said polyol is selected from the group consisting of 1,3-budandiol, and 1,5-pentandiol.

10. The aqueous ink composition according to claim 1, wherein said ink composition comprises an amount of said polyol ranging from 1% to 30% by weight, preferably from 2% to 25% by weight, more preferably from 3% to 20% by weight, and even more preferably from 5% to 15% by weight.

11. The aqueous ink composition according to claim 1, wherein said ink composition comprises an amount of said pigment ranging from 0.5 to 15% by weight, preferably from 1% to 10% by weight, more preferably from 2% to 9% by weight.

12. A printing process comprising:
• a printing step applying the aqueous ink composition as defined in claims 1 to 11 onto a substrate,
• a fixing/drying step by applying heat to chemically reacting the crosslinking agent and the polyurethane binder of the aqueous ink composition.

13. The printing process according to claim 12, wherein the substrate is not subjected to a pre-treatment step with a pre-treatment solution before the printing step.

14. The printing process according to claim 12, wherein the substrate is not subjected to a post-treatment step with a post-treatment solution after the printing step.

15. The printing process according to any one of claims 12 to 14, wherein said substrate is a textile substrate.

16. The printing process according to claim 15, wherein said textile substrate is selected from the group consisting of wool, cotton, silk, polypropylene, polyethylene, aliphatic and aromatic polyamides, viscose, cellulose and polyester.

## Patentansprüche

1. Wässrige Tintenzusammensetzung, die ein Pigment, ein Polyurethanbindemittel, ein blockiertes Vernetzungsmittel und ein Polyol umfasst, wobei das Polyol aus der Gruppe bestehend aus Ethylenglykol, 1,3-Budandiol, 1,5-Pentandiol, Triethylenglykol und Trimethylolpropan ausgewählt ist.

2. Wässrige Tintenzusammensetzung nach Anspruch 1, wobei das Polyurethanbindemittel ein Polyurethanpolymer ist, das an das Gerüst des Polymers gebundene hängende Hydroxylgruppen umfasst.

3. Wässrige Tintenzusammensetzung nach Anspruch 2, wobei das Polyurethanpolymer weiter an das Gerüst des Polymers gebundene neutralisierte hängende Carboxylgruppen umfasst.

4. Wässrige Tintenzusammensetzung nach Anspruch 1, wobei die Tintenzusammensetzung eine Menge des Polyurethanbindemittels umfasst, die von 1 Gew.-% bis 40 Gew.-%, vorzugsweise von 2 Gew.-% bis 35 Gew.-%, bevorzugter von 5 Gew.-% bis 30 Gew.-%, noch bevorzugter 10 Gew.-% bis 25 Gew.-% reicht.

5. Wässrige Tintenzusammensetzung nach Anspruch 1, wobei das blockierte Vernetzungsmittel in der Lage ist, mit einer Hydroxylgruppe des Polyurethanbindemittels zu reagieren.

6. Wässrige Tintenzusammensetzung nach Anspruch 1, wobei das blockierte Vernetzungsmittel eine wasserdispergierbare blockierte Isocyanatverbindung ist.

7. Wässrige Tintenzusammensetzung nach Anspruch 1, wobei das blockierte Vernetzungsmittel aus der Gruppe bestehend aus lactam-blockiertem Isocyanat, pyridinblockiertem Isocyanat, oxim-blockiertem Isocyanat, azol-blockiertem Isocyanat, malonatblockiertem Isocyanat, phenol-blockiertem Isocyanat, alkohol-blockiertem Isocyanat, mercaptan-blockiertem Isocyanat, uretdion-blockiertem Isocyanat, acetanilidblockiertem Isocyanat, sebacat-blockiertem Isocyanat, polymer-blockiertem Isocyanat und einem Gemisch davon ausgewählt ist.

8. Wässrige Tintenzusammensetzung nach Anspruch 1, wobei die Tintenzusammensetzung eine Menge des blockierten Vernetzungsmittels umfasst, die von 1 Gew.-% bis 20 Gew.-%, vorzugsweise von 2 Gew.-% bis 15 Gew.-%, und bevorzugter von 5 Gew.-% bis 10 Gew.-%, reicht.

9. Wässrige Tintenzusammensetzung nach Anspruch 1, wobei das Polyol aus der Gruppe bestehend aus 1,3-Budandiol und 1,5-Pentandiol ausgewählt ist.

10. Wässrige Tintenzusammensetzung nach Anspruch 1, wobei die Tintenzusammensetzung eine Menge des Polyols umfasst, die von 1 Gew.-% bis 30 Gew.-%, vorzugsweise von 2 Gew.-% bis 25 Gew.-%, bevorzugter von 3 Gew.-% bis 20 Gew.-%, und noch bevorzugter von 5 Gew.-% bis 15 Gew.-%, reicht.

11. Wässrige Tintenzusammensetzung nach Anspruch 1, wobei die Tintenzusammensetzung eine Menge des Pigments umfasst, die von 0,5 bis 15 Gew.-%, vorzugsweise von 1 Gew.-% bis 10 Gew.-%, bevorzugter von 2 Gew.-% bis 9 Gew.-%, reicht.

12. Druckverfahren, umfassend:
- einen Druckschritt zum Aufbringen der in den Ansprüchen 1 bis 11 definierten wässrigen Tintenzusammensetzung auf ein Substrat,
- einen Fixierungs-/Trocknungsschritt durch Anwenden von Wärme zum chemischen Reagieren des Vernetzungsmittels und des Polyurethanbindemittels der wässrigen Tintenzusammensetzung.

13. Druckverfahren nach Anspruch 12, wobei das Substrat vor dem Druckschritt keinem Vorbehandlungsschritt mit einer Vorbehandlungslösung unterzogen wird.

14. Druckverfahren nach Anspruch 12, wobei das Substrat nach dem Druckschritt keinem Nachbehandlungsschritt mit einer Nachbehandlungslösung unterzogen wird.

15. Druckverfahren nach einem der Ansprüche 12 bis 14, wobei das um ein Textilsubstrat ist.

16. Druckverfahren nach Anspruch 15, wobei das Textilsubstrat aus der Gruppe bestehend aus Wolle, Baumwolle, Seide, Polypropylen, Polyethylen, aliphatischen und aromatischen Polyamiden, Viskose, Zellulose und Polyester ausgewählt ist.

## Revendications

1. Composition d'encre aqueuse comprenant un pigment, un liant polyuréthane, un agent de réticulation bloqué et un polyol, dans lequel ledit polyol est choisi parmi le groupe consistant de l'éthylène glycol, du 1,3-budanediol, du 1,5-pentanediol, du triéthylène glycol et du triméthylolpropane.

2. Composition d'encre aqueuse selon la revendication 1, dans laquelle ledit liant polyuréthane est un polymère de polyuréthane comprenant des groupes hydroxyle pendants fixés à la chaîne principale du polymère.

3. Composition d'encre aqueuse selon la revendication 2, dans laquelle ledit polymère de polyuréthane comprend en outre des groupes carboxyle neutralisés pendants fixés à la chaîne principale du polymère.

4. Composition d'encre aqueuse selon la revendication 1, dans laquelle ladite composition d'encre comprend une quantité dudit liant polyuréthane située dans la plage allant de 1% à 40 % en poids, de préférence de 2 % à 35 % en poids, plus préférentiellement de 5 % à 30 % en poids et plus préférentiellement de 10 % à 25 % en poids.

5. Composition d'encre aqueuse selon la revendication 1, dans laquelle ledit agent de réticulation bloqué est capable de réagir avec un groupe hydroxyle du liant polyuréthane.

6. Composition d'encre aqueuse selon la revendication 1, dans laquelle ledit agent de réticulation bloqué est un composé isocyanate bloqué dispersible dans l'eau.

7. Composition d'encre aqueuse selon la revendication 1, dans laquelle ledit agent de réticulation bloqué est choisi parmi le groupe consistant en l'isocyanate bloqué de lactame, l'isocyanate bloqué de pyridine, l'isocyanate bloqué d'oxime, l'isocyanate bloqué d'azole, l'isocyanate bloqué de malonate, l'isocyanate bloqué de phénol, l'isocyanate bloqué d'alcool, l'isocyanate bloqué de mercaptan, l'isocyanate bloqué d'urétdione, l'isocyanate bloqué d'acétanilide, l'isocyanate bloqué de sébacate, l'isocyanate bloqué de polymère et des mélanges de ceux-ci.

8. Composition d'encre aqueuse selon la revendication 1, dans laquelle ladite composition d'encre comprend une quantité dudit agent de réticulation bloqué située dans la plage allant de 1 % à 20 % en poids, de préférence de 2 % à 15 % en poids et plus préférentiellement de 5 % à 10 % en poids.

9. Composition d'encre aqueuse selon la revendication 1, dans laquelle ledit polyol est choisi parmi le groupe consistant en du 1,3-budandiol et du 1,5-pentandiol.

10. Composition d'encre aqueuse selon la revendication 1, dans laquelle ladite composition d'encre comprend une quantité dudit polyol située dans la plage allant de 1% à 30 % en poids, de préférence de 2 % à 25 % en poids, plus préférentiellement de 3 % à 20 % en poids, et plus préférentiellement encore de 5 % à 15 % en poids.

11. Composition d'encre aqueuse selon la revendication 1, dans laquelle ladite composition d'encre comprend une quantité dudit pigment située dans la plage allant de 0,5 à 15 % en poids, de préférence de 1 % à 10 % en poids, plus préférentiellement de 2 % à 9 % en poids.

12. Procédé d'impression comprenant :
- une étape d'impression consistant à appliquer la composition d'encre aqueuse, telle que définie selon les revendications 1 à 11 sur un substrat,
- une étape de fixation/séchage consistant à appliquer de la chaleur pour faire réagir chimiquement l'agent de réticulation et le liant polyuréthane de la composition d'encre aqueuse.

13. Procédé d'impression selon la revendication 12, dans lequel le substrat n'est pas soumis à une étape de prétraitement avec une solution de prétraitement avant l'étape d'impression.

14. Procédé d'impression selon la revendication 12, dans lequel le substrat n'est pas soumis à une étape de post-traitement avec une solution de post-traitement après l'étape d'impression.

15. Procédé d'impression selon l'une quelconque des revendications 12 à 14, dans lequel ledit substrat est un substrat textile.

16. Procédé d'impression selon la revendication 15, dans lequel ledit substrat textile est choisi parmi le groupe consistant en de la laine, du coton, de la soie, du polypropylène, du polyéthylène, des polyamides aliphatiques et aromatiques, de la viscose, de la cellulose et du polyester.
